# EUROPÄISCHE PATENTSCHRIFT

(11) **EP 2 686 815 B1**
(45) Veröffentlichungstag und Bekanntmachung des Hinweises auf die Patenterteilung: **09.05.2018**
(21) Anmeldenummer: 12709862.2
(22) Anmeldetag: 15.03.2012
(51) Int. Cl.: G06Q 10/08, A47J 36/06

(54) **DECKEL, INSBESONDERE MEHRWEG-DECKEL**
LID, IN PARTICULAR A RE-USABLE LID
COUVERCLE, EN PARTICULIER COUVERCLE RÉUTIILISABLE

(30) Priorität: 18.03.2011 DE 102011014438; 27.01.2012 DE 102012001652
(43) Veröffentlichungstag der Anmeldung: 22.01.2014
(73) Patentinhaber: Rieber AG, 8360 Eschlikon (CH)
(72) Erfinder: MAIER, Max, 71636 Ludwigsburg (DE)
(74) Vertreter: Schumacher & Willsau
(86) Internationale Anmeldenummer: PCT/EP2012/054597
(87) Internationale Veröffentlichungsnummer: WO 2012/126807

(56) Entgegenhaltungen:
- EP-A2- 2 222 133
- DE-A1-102008 009 247
- DE-U1-202006 007 735
- JP-A- 2008 081 165
- US-A- 5 951 900
- US-A1- 2009 206 080
- US-A1- 2009 242 074
- US-A1- 2010 000 995

## Beschreibung

Die Erfindung betrifft einen Deckel, insbesondere Mehrweg-Deckel zum hermetischen Verschließen eines Behälters, insbesondere eines Mehrweg-Behälters, mit einer Einrichtung, die für das Aufbauen eines Vakuums in dem Behälter und/oder für das Unter-Druck-setzen von Gas in dem Behälter ausgebildet ist, und mit einem RFID-Transponder wenigstens als ein Temperatursensor versehen ist, wobei der RFID-Transponder zusätzlich oder alternativ zur Messung von Druck und/oder Zeit ausgebildet ist und wenigstens einen Informationsspeicher aufweist, wobei der Informationsspeicher zur drahtlosen Kommunikation von gespeicherten und zu speichernden Daten ausgebildet ist und wobei der RFID-Transponder (28) mit einer internen Stromversorgung versehen ist, wobei der Deckel für das hermetische Verschließen mit einer Dichtung versehen ist.

Deckel zum Verschließen von Behältern aus Metall, metallischem Mehrschichtmaterial oder Kunststoff, insbesondere von GN-Behältern, sind in den verschiedensten Ausbildungen bekannt, zum Beispiel aus dem Fachhändler-Preisbuch 2007/2008 der Rieber GmbH & Co. KG, D-72770 Reutlingen, S. 20 und 21, wobei Behälter und Deckel zum Vakuumieren ebenfalls aus dieser Literaturstelle bekannt sind, S. 26 und 27.

Weiter ist bereits ein Vakuumierer "Kolibri" bekannt geworden (Bedienungsanleitung Vakuumierer "Kolibri", Rieber GmbH & Co. KG, D-72770 Reutlingen, August 2009). Bei diesem bekannten Vakuumierer werden Behälter aus metallischem Mehrschichtmaterial, sogenanntem "Thermoplate", eingesetzt, die in Verbindung mit einem sogenannten vacutec Deckel und einem sogenannten vacutec Ventil einen vakuumdichten Verschluss des Behälters ergeben. Das Vakuumieren erfolgt mit Hilfe einer Vakuumpumpe, die mit einer Saugspitze auf ein Ventil des Behälters, besser gesagt des Deckels, aufgesetzt und solange betätigt wird, bis ein gewünschter Unterdruckwert erreicht ist. Wenn die Vakuumpumpe abgenommen wird, schließt das Ventil den Deckel automatisch. Der Vakuumierer vereinfacht die Vorratshaltung von Lebensmitteln in einem Vakuum (also ohne Luft), wodurch deren Aufbewahrungszeit im Kühlschrank, im Tiefkühler oder in der Speisekammer entscheidend verlängert wird. Das Vakuumieren in Behältern ist vor allem wichtig für Dinge, die häufig benötigt werden. Trockene Lebensmittel wie etwa Teigwaren, Getreideprodukte, Mehl, Zucker, Kartoffel-Chips, Brezeln oder Gebäck und Tierfutter werden Beschaffenheit, Frische und Geschmack bis zuletzt bewahren. Salate, Gemüse und Kräuter können für die kommende Woche gereinigt und in einem solchen thermoplate Behälter vakuumiert werden. Sie werden frisch und knackig bleiben.

Ein Deckel der eingangs genannten Art ist aus dem Dokument US 2009/206080 A1 bekannt. Es handelt sich dabei um einen Deckel, der universell einsetzbar sein soll. Der Deckel besteht aus einem biegsamen Material, so dass er sich an Behälter unterschiedlicher Größen anpassen kann. Er soll in der Lage sein, wenigstens zwei unterschiedliche Behälter verschließen zu können, die sich hinsichtlich der Größe der Behälteröffnung voneinander unterscheiden. Der Deckel kann mit einer oder mehreren Detektorkomponenten versehen sein, zum Beispiel zum Erfassen von Temperatur, Zeit usw., und er kann ein gasdurchlässiges Bauteil aufweisen, das bestimmten Gases erlaubt, in den geschlossenen Behälter zu gelangen und den geschlossen Behälter zu verlassen. Der Behälter an sich kann mit einem Vakuumpump- oder Unter-Druck-Setz-System in Kombination mit Lebensmittellagersystemen verwendet werden. In diesem Fall würde ein hartwandiger Behälter eingesetzt werden, der als einen integralen Bestandteil eine batteriegespeiste Vakuumpumpe aufweist. Diese könnte benutzt werden, um Luft aus dem Lagerbehälter zu saugen, so dass dessen Inhalt in einem Teilvakuum zurück bleibt. Das Unter-Druck-Setz-System ist in diesem Dokument nicht näher beschrieben. Es dürfte aber davon auszugehen sein, dass es sich dabei um dieselbe Vakuumpumpe handeln kann, die einfach gegenläufig betrieben wird, um Gas in dem Behälter unter Druck zu setzen, statt es abzusaugen.

Weiter soll dieser bekannte Deckel für den Einsatz in einem Temperaturbereich von 20 °C bis 200 °C vorgesehen sein. Bei den RFIDs, die bei diesem bekannten Deckel einsetztbar sein sollen, soll es sich um passive oder aktive Etiketten handeln können, wobei die aktiven Etiketten eine interne Stromversorgung benötigen. Nähere Angaben über den Aufbau oder die Positionierung von solchen internen Stromversorgungen finden sich in diesem Dokument nicht. Für den angegebenen Temperaturbereich wäre als interne Stromversorgung eine hochtemperaturfeste Batterie erforderlich, die es in einer marktgängigen Ausbildung für einen solchen Zweck bislang aber nicht gibt.

Aus dem Dokument DE 10 2008 009 247 A1 ist ein Deckel für Speisenbehälter im Gastronormformat mit einer umlaufenden elastischen Dichtung bekannt, wobei mittels des Deckels ein Innenraum zwischen dem Speisenbehälter und dem Deckel abdichtbar ist, und mit wenigstens einem Strömungskanal durch den Deckel. Es sind Mittel vorgesehen, um den Strömungskanal wenigstens bei Drücken im Innenraum unterhalb eines vorbestimmten Überdrucks wahlweise abzusperren oder freizugeben und um bei Überschreiten des vorbestimmten Überdrucks den Strömungskanal wenigstens abschnittsweise freizugeben. Eine empfohlene Verwendung dieses bekannten Deckels ist dessen Einsatz beim Vakuumieren mit Überdruck. Zu den genannten Mitteln zählt ein Überdrucksensor, der wie ein Überdruckventil auf 0,5 bar anspricht.

Aus dem Dokument EP 1 830 315 A1 ist ein elektronisches Steuerungs- und Kommunikationssystem zum Überwachen des Zustands von Produkten bekannt. Das System umfasst einen Mikrocontroller, einen passiven Transponder, eine Stromversorgung und eine Reihe von Sensoren. Der Mikrocontroller ist in der Lage, die Daten aus den Sensoren zu lesen und sie in dem Transponder in Form von Information abzuspeichern, welche sich auf den Zustand der Produkte bezieht, so dass die Information von außerhalb des Produkts her gelesen werden kann. Offenbar befinden sich in diesem Fall die Produkte in einem Container, welcher elektrisch geöffnet und geschlossen werden kann. Das Öffnen und Schließen des Containers wird ebenfalls durch einen Sensor überwacht. Das System soll längs Logistikleitungen vermutlich zum Überwachen des Zustands von Containern und darin enthaltenen einzelnen Packungen benutzt werden. Bei genauer Betrachtung misst dieses System somit nur den Umgebungszustand eines Produkts, das in einer Packung innerhalb des Containers untergebracht ist, nicht aber den Zustand des Produkts innerhalb der Packung.

Ein älterer Vorschlag der Anmelderin (Dokument DE 10 2011 014 438 A1, nicht vorveröffentlicht) befasst sich mit dem Ziel, einen geeigneten Deckel und ein Logistiksystem, bei dem der Deckel einsetzbar ist, zu schaffen.

Der Deckel nach dem älteren Vorschlag erlaubt, einen Reinraum in einem Mehrweg-Behälter, sprich die Garantie von Druck und Temperatur in einem Volumen zu erzielen. Das wird ermöglicht mit dem Deckel nach dem älteren Vorschlag unter Zuhilfenahme eines Ventilsystems, das nicht nur als Gasabsaugventil, sondern auch als Gaszufuhrventil ausgebildet ist. Bei dem zuzuführenden Gas kann es sich um Stickstoff handeln, der Lebensmittel länger frisch hält, oder um irgendein anderes Gas, welches in dem Vakuumbehälter gelagerte Bauteile zum Beispiel trocken hält oder vor Lufteinwirkung schützt.

Bei der hier vorliegenden Erfindung dient ein solcher Deckel zum Erreichen eines anderen Ziels.

Aus dem Dokument DE 10 2005 048 406 A1 ist ein intelligenter GN(Gastronorm)-Behälter bekannt, der in seiner Gesamtheit aus einem metallischen Mehrschichtmaterial aus mehreren aufeinander befestigten Schichten besteht. Wenigstens eine Sende- und/oder Empfangseinrichtung, wenigstens für Temperaturinformation, ist in das Mehrschichtmaterial integriert. Mit Hilfe der Temperaturinformation ist ein Kochvorgang temperaturabhängig steuerbar. Wenn die Sende- und/oder Empfangseinrichtung eine Temperaturinformation liefern soll, benötigt sie für den Temperaturmessvorgang eine Stromversorgung. Bei den in dem Mehrschichtmaterial bei einem Kochvorgang auftretenden Temperaturen ist eine (hochtemperaturfeste) Batterie erforderlich, die es aber, wie oben dargelegt, in einer marktgängigen Ausbildung für einen solchen Zweck noch nicht gibt.

Ziel der vorliegenden Erfindung ist es, das Problem der nicht ausreichenden Temperaturfestigkeit der Stromversorgung zu lösen und so die Steuermöglichkeit eines Kochvorgangs wenigstens in Abhängigkeit von der Temperatur zu gewährleisten.

Erfindungsgemäß besteht die Lösung darin, dass die Einrichtung ein Ventilsystem umfasst, das wenigstens als ein Gasabsaugventil und weiter wenigstens als ein Gaszufuhrventil zum Begasen eines Behälterinhalts ausgebildet ist, wobei der RFID-Transponder mit seiner internen Stromversorgung in das Gasabsaugventil integriert ist, wobei der RFID-Transponder mit einer Sende- und/oder Empfangseinrichtung versehen ist, die zur drahtlosen Kommunikation ausgebildet ist, wobei der RFID-Transponder mit seiner internen Stromversorgung in ein Verschlussstück des Gasabsaugventils integriert ist, wobei das Verschlussstück einen Fortsatz hat, der sich in den Behälter erstreckt, und wobei der RFID-Transponder einen Fortsatz hat, der sich durch eine Durchgangsöffnung des Fortsatzes des Verschlussstückes ebenfalls in den Behälter erstreckt.

Der erfindungsgemäßen Lösung liegt die Überlegung zugrunde, dass am oder in dem Deckel bei einem Kochvorgang, wenn sich der Deckel auf einem Speisenbehälter befindet, keine so hohe Temperatur wie in dem Material des Speisenbehälters selbst auftritt. Die Temperatur wird an dem Deckel maximal die Temperatur des über der kochenden Speise entstehenden Wasserdampfes erreichen. Daher lässt sich bei Einsatz des erfindungsgemäßen Deckels der Temperatursensor mit einer handelsüblichen Batterie ausstatten, die für Temperaturen bis zu 125° Celsius geeignet und in marktgängiger Form erhältlich ist. Auf diese Weise kann der Temperatursensor mit einer Batterie ausgestattet werden, von der aber die Temperatur so weit ferngehalten wird, dass die Batterie nicht durch eine zu hohe Temperatur geschädigt wird. Wenn der Deckel mit einem Speisenbehälter kombiniert ist und frischzuhaltende Speise enthält, kann die Kombination aus Deckel und Behälter ohne weiteres direkt auf ein Kochgerät gestellt werden, also ohne dass die Speise vorher in ein anderes Kochgefäß umgefüllt wird. Darüber hinaus macht sich die erfindungsgemäße Lösung zunutze, dass bei einem Garen unter Vakuum ("sous vide") die Gartemperatur nur ca. 60°C beträgt, im Gegensatz zu dem Kochen bei normalen atmosphärischen Bedingungen, bei dem die Gartemperatur 100°C beträgt. Wenn der RFID-Transponder auch Druck und Zeit misst und über seinen Informationsspeicher Informationen/Programme/Daten speichert, kann der RFID-Transponder mit einem Ofen/Herd kommunizieren, um dessen Betrieb zu steuern. Das bedeutet, dass ein mit dem erfindungsgemäßen Deckel versehener Behälter in einen Ofen geschoben werden kann, wo dann der RFID-Transponder dem Ofen ein Programm übermittelt oder ein entsprechendes Programm über die Steuerung am Ofen auswählt. Der RFID-Transponder misst die Temperatur am/im Behälter und wirkt entsprechend auf die Steuerung ein. So kann gewährleistet werden, dass eine Speise nicht verkocht oder zu kalt bleibt.

Der Deckel nach der Erfindung ist auch einsetzbar bei der Lagerung von Lebensmitteln sowie bei dem Transport und der Logistik von allem, was luftdicht, vakuumiert, begast, temperatur- und/oder druckabhängig transportiert werden muss wie zum Beispiel Elektronikteile, Pharma-Produkte, hochwertige Lebensmittel, Zigarren od. dgl.

Die Ausstattung des RFID-Transponders des Deckels nach der Erfindung mit einer Sende- und/oder Empfangseinrichtung, die zur drahtlosen Kommunikation ausgebildet ist, ermöglicht auf einfache Weise eine Fernabfrage der im Behälter gemessenen Temperaturen und erlaubt das Fernsteuern dieses Parameters, zum Beispiel zur Aufrechterhaltung von bestimmten Sollwerten desselben.

Die Integration des RFID-Transponders mit seiner internenen Stromversorgung in ein Verschlussstück des Gasabsaugventils gewährleistet, dass die Stromversorgung des RFID-Transponders keinen zu hohen Temperaturen ausgesetzt sein wird und somit aus einer handelsüblichen Batterie bestehen kann.

Dadurch, dass bei dem Deckel nach der Erfindung das Verschlussstück einen Fortsatz hat, der sich in den Behälter erstreckt, und der RFID-Transponder einen Fortsatz hat, der sich durch eine Durchgangsöffnung des Fortsatzes des Verschlussstückes ebenfalls in den Behälter erstreckt, ergibt sich eine zusätzliche Sicherung der Stromversorgung des RFID-Transponders vor zu hoher Temperatur.

Ausgestaltungen der Erfindung bilden die Gegenstände der abhängigen Ansprüche.

In einer Ausgestaltung des Deckels nach der Erfindung wird dieser in Kombination mit einem Behälter, insbesondere einem Mehrweg-Behälter, der durch den Deckel hermetisch verschließbar ist, eingesetzt. Diese Kombination gewährleistet, dass ein in dem Behälter enthaltenes Gut sicher transportiert werden kann, ohne dass die Gefahr besteht, dass sich der Deckel während des Transports von dem Behälter löst.

In einer weiteren Ausgestaltung des Deckels nach der Erfindung ist er mit einem Behälter aus nichtrostendem Stahl, Kunststoff, emailliertem Material oder metallischem Mehrschichtmaterial, insbesondere einem GN-Behälter, kombinierbar oder kombiniert. Diese Ausgestaltung ergibt die eingangs bereits erwähnte Kombination, die sich für die Logistik in der Gastronomie ebenso wie im Elektronik- oder Pharmabereich eignet.

Eine weitere Ausgestaltung der Erfindung beinhaltet den Deckel zusätzlich in Kombination mit einem durch den RFID-Transponder drahtlos fernsteuer- oder regelbaren Kochgerät. In dieser Kombination kann der RFID-Transponder mit dem Kochgerät kommunizieren und diesem Information über die aktuelle Temperatur im Behälter liefern. Das ermöglicht, mit Hilfe der Temperaturinformation das Kochgerät drahtlos fernzusteuern oder fernzuregeln, so dass die Temperatur im Behälter konstant bleibt. Im vorliegenden Fall wird die Temperatur der Speise zwar nicht innerhalb derselben gemessen, sondern die Temperatur unmittelbar unterhalb des Deckels oder an dem Deckel, für diverse Garverfahren (Sous-vide- oder Dampfgaren) ist es aber eher nebensächlich, welche Temperatur im Lebensmittel herrscht, da es hier um die Temperatur des Wassers oder Wasserdampfes geht.

Ausführungsbeispiele der Erfindung werden im Folgenden unter Bezugnahme auf die Zeichnungen näher beschrieben. Es zeigt
- Fig. 1: ein Ausführungsbeispiel des Deckels nach der Erfindung in Draufsicht,
- Fig. 2: eine Längsschnittansicht des Deckels nach der Erfindung nach der Linie II-II in Fig. 1,
- Fig. 3a: in vergrößertem Maßstab eine Einzelheit des Deckels nach Fig. 2,
- Fig.3b: in vergrößertem Maßstab eine weitere Einzelheit des Deckels nach Fig. 2,
- Fig. 4a: in größerem Maßstab als in Fig. 3a ein Gasabsaugventil,
- Fig.4b: das Gasabsaugventil nach Fig. 4a in Draufsicht und
- Fig. 5: eine Kombination eines Behälters nach der Erfindung mit einem Mehrweg-Behälter und einem durch einen RFID-Transponder des Deckels drahtlos fernsteuer- oder regelbaren Kochgerät.

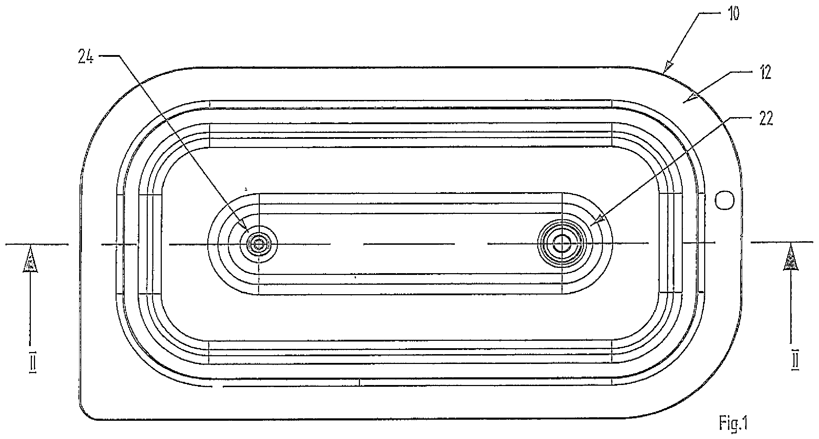

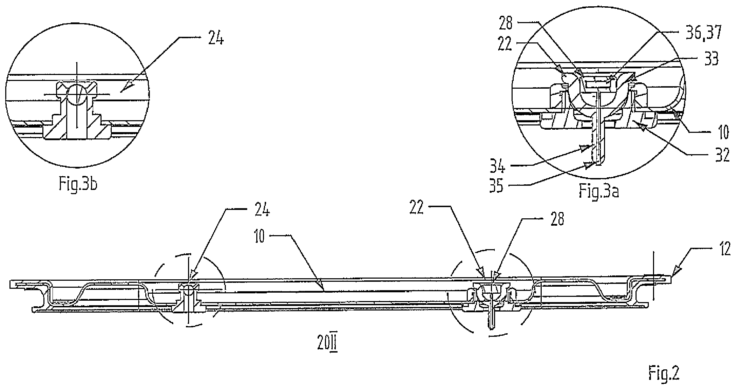

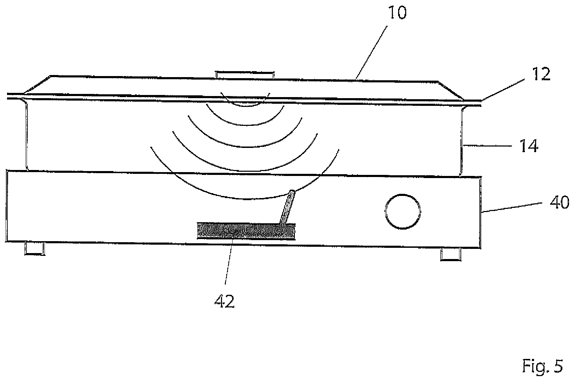

Fig. 1 zeigt in Draufsicht ein Ausführungsbeispiel eines Deckels 10, der insbesondere als ein Mehrweg-Deckel ausgebildet ist. Der Deckel 10 ist mit einer Dichtung 12 versehen. Die Dichtung 12 ist in Fig. 2 zu erkennen, die den Deckel 10 in einer Längsschnittansicht nach der Linie II-II in Fig. 1 zeigt. Der Deckel 10 dient zum hermetischen Verschließen eines Behälters 14, der in Fig. 5 gezeigt ist. Der Deckel 10 besteht vorzugsweise aus Blech aus nichtrostendem Stahl oder aus einem metallischen Mehrschichtmaterial, sogenanntem thermoplate®. Gleiches gilt für den Behälter 14. Der Deckel kann statt dessen durchsichtig oder transparent sein und z. B. aus Kunststoff oder einem hitzebeständigem Glas bestehen.

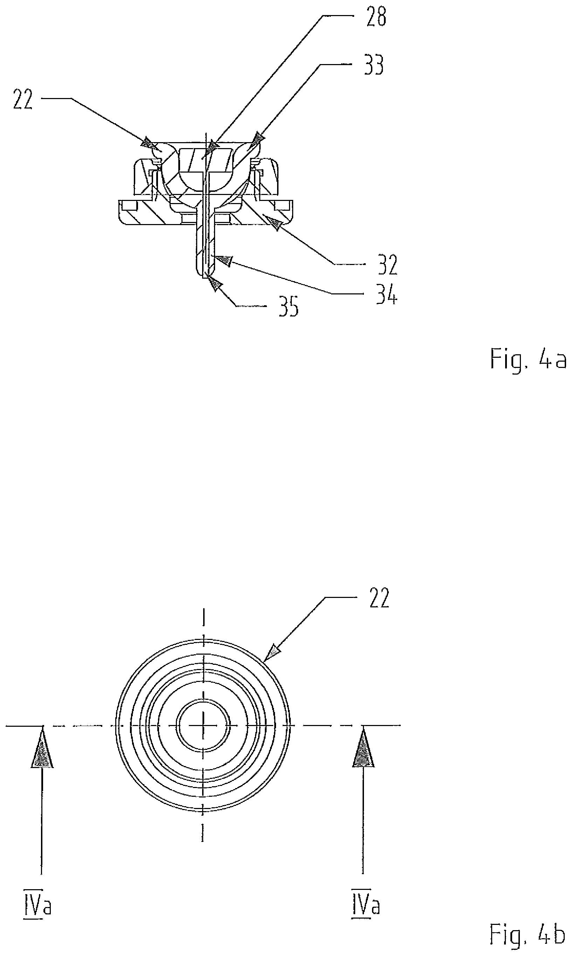

Der Deckel 10 ist mit einem insgesamt mit 20 bezeichneten Ventilsystem versehen, das u.a. als ein Gasabsaugventil 22 für das Aufbauen eines Vakuums in dem Behälter 14 ausgebildet ist. Das Ventilsytem 20 ist weiter als ein Gasanschluss- oder Gaszufuhrventil 24 ausgebildet. Außerdem weist das Ventilsystem 20 einen in das Gasabsaugventil 22 integrierten RFID-Chip oder -Transponder 28 auf, der wenigstens als ein Temperatursensor ausgebildet ist. Das Gasabsaugventil 22 ist zusammen mit dem RFID-Transponder 28 in größerem Maßstab jeweils als Einzelheit in den Fig. 3a und 4a gezeigt.

Der RFID-Transponder 28 ist ein aktiver Transponder, der mit einer nur in Fig. 3a angedeuteten Stromversorgung in Form einer Batterie 36 versehen.

Der RFID-Transponder 28 ist nicht nur als ein Temperatursensor ausgebildet, sondern alternativ oder zusätzlich zur Messung von Druck und/oder Zeit. Der RFID-Transponder 28 weist einen Informationsspeicher 37 auf, welcher zur drahtlosen Kommunikation von gespeicherten und zu speichernden Daten ausgebildet ist. Der Informationsspeicher 37 und die Batterie 36 sind der Einfachheit halber schematisch als ein gemeinsamer Block dargestellt (Fig. 3a).

Der RFID-Transponder 28 kann für jede der Messungen von Druck, Temperatur und Zeit einen gesonderten Informationsspeicher aufweisen. In vorliegendem Fall ist nur der Informationsspeicher 37 gezeigt, der allen Sensoren zugeordnet ist und somit alle Druck-, Temperatur- und Zeitdaten gemeinsam speichert. Der Informationsspeicher 37 ist zur drahtlosen Kommunikation ausgebildet (z.B. FID, WLAN, Bluetooth usw.). Der Informationsspeicher liefert eine integrierte Anzeige für alle Messwerte, die fernablesbar sind.

Zusätzlich zu der Einzelheit in Fig. 3a ist das Gasabsaugventil 22 als eine Einzelheit in Fig. 4a gezeigt, und zwar im Längsschnitt nach der Linie IVa-IVa in Fig. 4b, die das Gasabsaugventil 22 in Draufsicht zeigt. Der Ventilsitz 32 ist in einer Öffnung in dem Deckel 10 befestigt, wie es in Fig. 3a zu erkennen ist. Das Verschlussstück 33 ist ein im Querschnitt etwa U-förmiger Körper, der einfach aus Gummi bestehen kann. Der Körper hat einen Fortsatz 34, der sich in den Behälter 14 erstreckt, wie es ebenfalls in Fig. 3a zu erkennen ist. Der lediglich schematisch dargestellte RFID-Transponder 28 hat einen Fortsatz 35, der sich durch eine Durchgangsöffnung des Fortsatzes 34 und somit ebenfalls in den Behälter 14 erstreckt. Der Fortsatz 35 symbolisiert eine Drucksonde und eine Temperatursonde für den RFID-Transponder 28 zum Messen von Druck und Temperatur innerhalb des Behälters 14. Das Gasabsaugventil 22 dient zum Vakuumieren des Behälters 14, wenn dieser durch den Deckel 10 hermetisch verschlossen ist. Das Gasabsaugventil 22 dient zugleich als ein Überdruckventil.

Der RFID-Transponder 28 ist in der Öffnung des Verschlussstückes 33 angeordnet, wie es in Fig. 4a gezeigt ist. Das elastische Verschlussstück 33 dient zum dichten Verschließen des Behälters 14 in dessen Vakuumzustand. Die Dichtung 12, die in Fig. 2 gezeigt ist, sorgt nicht nur für eine gute Abdichtung des Behälters 14 in dem Vakuumzustand, sondern auch dann, wenn das Vakuum unterbrochen ist.

An das Vakuumieren des Behälters kann sich ein Begasen des Inhalts des Behälters 14 oder eine Begasung mit Spülung des Behälters 14 anschließen, wobei das Begasen oder die Begasung mit Hilfe des RFID-Transponders 28 überwacht wird. Für das Begasen wird das Gaszufuhrventil 24 benutzt, das in Fig. 1 in Draufsicht, in Fig. 2 in der Längsschnittansicht des Deckels 10 in einer Seitenansicht und in Fig. 3b als eine Einzelheit in vergrößertem Maßstab gezeigt ist.

Der Behälter 14 besteht aus nichtrostendem Stahl, Kunststoff, emailliertem Material oder metallischem Mehrschichtmaterial und ist insbesondere ein Gastronom- oder GN-Speisenbehälter, der mit dem Deckel 10 kombinierbar ist.

Der RFID-Transponder 28 kann ein Teil des Informationsspeichers sein oder diesen selbst bilden. Auf jeden Fall ist er dafür ausgebildet, den Wert des Vakuums und/oder der Temperatur sowie den Druck und/oder die Zeit zu speichern und für eine Fernabfrage bereit zu halten. Für diesen Zweck ist der RFID-Transponder 28 mit einer Sende- und/oder Empfangseinrichtung versehen (nicht dargestellt), die zur drahtlosen Kommunikation ausgebildet ist.

Fig. 5 zeigt in einer Seitenansicht eine Kombination des Deckels 10 mit einem Behälter 14, wobei zwischen ihnen die Dichtung 12 angeordnet ist. Der Behälter 14 steht auf dem Kochgerät 40. Die Temperatur des Kochgerätes 40 ist durch den in dem Deckel 10 angeordneten RFID-Transponder 28 steuerbar. Eine drahtlos fernsteuerbare Sende-/Empfangseinheit des Kochgerätes 40 ist in Fig. 5 mit 42 bezeichnet.

Die Batterie 36 kann in der Praxis eine dem RFID-Transponder 28 zugeordnete Knopfzelle sein. Diese ist in Fig. 3a der Übersichtlichkeit halber im Verhältnis zu dem RFID-Transponder 28 übertrieben groß dargestellt.

Das in den Zeichnungen dargestellte und oben beschriebene Gasabsaugventil 22 ist ein intelligentes Sensorventil zur Überwachung von Temperatur, Druck und Zeit sowie zum Austausch von Daten für Steuerungszwecke, Sicherheit und Logistik.

### Bezugszeichenliste

- 10: Deckel
- 12: Dichtung
- 14: Behälter
- 20: Ventilsystem
- 22: Gasabsaugventil
- 24: Gaszufuhrventil
- 28: RFID-Transponder
- 32: Ventilsitz
- 33: Verschlussstück
- 34: Fortsatz
- 35: Fortsatz
- 36: Batterie
- 37: Informationsspeicher
- 40: Kochgerät
- 42: Sende-/Empfangseinheit

## Patentansprüche

1. Deckel, insbesondere Mehrweg-Deckel zum hermetischen Verschließen eines Behälters (14), insbesondere eines Mehrweg-Behälters,
mit einer Einrichtung, die für das Aufbauen eines Vakuums in dem Behälter (14) und/oder für das Unter-Druck-setzen von Gas in dem Behälter (14) ausgebildet ist, und mit einem RFID-Transponder (28) wenigstens als ein Temperatursensor versehen ist, wobei der RFID-Transponder (28) zusätzlich oder alternativ zur Messung von Druck und/oder Zeit ausgebildet ist und wenigstens einen Informationsspeicher aufweist, wobei der Informationsspeicher zur drahtlosen Kommunikation von gespeicherten und zu speichernden Daten ausgebildet ist und wobei der RFID-Transponder (28) mit einer internen Stromversorgung versehen ist,
wobei der Deckel (10) für das hermetische Verschließen mit einer Dichtung (12) versehen ist,
**dadurch gekennzeichnet,**
**dass** die Einrichtung ein Ventilsystem (20) umfasst, das wenigstens als ein Gasabsaugventil (22) und weiter wenigstens als ein Gaszufuhrventil (24) zum Begasen eines Behälterinhalts ausgebildet ist,
**dass** der RFID-Transponder (28) mit seiner internen Stromversorgung in das Gasabsaugventil (22) integriert ist,
**dass** der RFID-Transponder (28) mit einer Sende- und/oder Empfangseinrichtung versehen ist, die zur drahtlosen Kommunikation ausgebildet ist,
**dass** der RFID-Transponder (28) mit seiner internen Stromversorgung in ein Verschlussstück (33) des Gasabsaugventils (22) integriert ist,
**dass** das Verschlussstück (33) einen Fortsatz (34) hat, der sich in den Behälter (14) erstreckt, und
**dass** der RFID-Transponder (28) einen Fortsatz (35) hat, der sich durch eine Durchgangsöffnung des Fortsatzes (34) des Verschlussstückes (33) ebenfalls in den Behälter (14) erstreckt.

2. Deckel nach Anspruch 1 in Kombination mit einem Behälter (14), insbesondere einem Mehrweg-Behälter, der durch den Deckel (10) hermetisch verschließbar ist.

3. Deckel nach Anspruch 2, **dadurch gekennzeichnet, dass** er mit einem Behälter (14) aus nichtrostendem Stahl, Kunststoff, emailliertem Material oder metallischem Mehrschichtmaterial, insbesondere einem GN-Behälter, kombinierbar oder kombiniert ist.

4. Deckel nach einem der vorhergehenden Ansprüche zusätzlich in Kombination mit einem durch den RFID-Transponder (28) drahtlos fernsteuer- oder regelbaren Kochgerät (40).

## Claims

1. A lid, in particular a re-usable lid, for hermetically sealing a container (14), in particular a re-usable container,
having means formed therein for creating a vacuum within the container (14) and/or for the pressurizing of gas within the container (14), and being provided with an RFID transponder (28) at least as a temperature sensor, wherein the RFID transponder (28) is additionally or alternatively formed for measuring pressure and/or time, and having at least one memory, wherein the memory is formed for the wireless communication of saved data and data to be saved, and wherein the RFID transponder (28) is provided with an internal power supply,
wherein the lid (10) is provided with a seal (12) for hermetically sealing,
**characterized in that**
the means comprises a valve system (20) formed at least as a gas purge valve (22) and further formed at least as a gas feed valve (24) for gassing a container content, the RFID transponder (28) with its internal power supply is integrated into the gas purge valve (22),
the RFID transponder (28) is provided with a transmitting and/or receiving means formed for wireless communication,
the RFID transponder (28), with its internal power supply, is integrated into a closure member (33) of the gas purge valve (22),
the closure member (33) has an extension (34) extending into the container (14), and the RFID transponder (28) has an extension (35) extending through a passage opening of the extension (34) of the closure member (33) into the container (14) as well.

2. The lid according to claim 1 in combination with a container (14), in particular a re-usable container, hermetically sealable by the lid (10).

3. The lid according to claim 2, **characterized in that** it is combinable or combined with a container (14), in particular a GN container, made of stainless steel, plastic, enamelled metal or metallic multilayer material.

4. The lid according to any of the preceding claims, additionally in combination with a cooking device (40) wirelessly remotely controllable and adjustable via the RFID transponder (28).

## Revendications

1. Couvercle, en particulier couvercle réutilisable pour la fermeture hermétique d'un récipient (14), en particulier d'un récipient réutilisable,
pourvu d'un dispositif conçu pour la création d'un vide dans le récipient (14) et/ou la mise sous pression d'un gaz dans le récipient (14) et d'un transpondeur RFID (28) au moins comme capteur de température, où le transpondeur RFID (28) est conçu également ou alternativement pour la mesure de la pression et/ou du temps et possède au moins une mémoire, où la mémoire est conçue pour la communication sans fil de données mémorisées et de données à mémoriser et où le transpondeur RFID (28) est pourvu d'une alimentation en courant interne,
où le couvercle (10) est pourvu d'un joint d'étanchéité (12) pour la fermeture hermétique,
**caractérisé en ce que**
le dispositif comporte un système de vannes (20) conçu au moins comme une vanne d'aspiration de gaz (22) et en outre au moins comme une vanne d'arrivée de gaz (24) pour la fumigation d'un contenu de récipient,
le transpondeur RFID (28) est intégré, avec son alimentation en courant interne, dans la vanne d'aspiration de gaz (22),
le transpondeur RFID (28) est pourvu d'un émetteur et/ou d'un récepteur conçu pour la communication sans fil,
le transpondeur RFID (28), avec son alimentation en courant interne, est intégré dans un obturateur (33) de la vanne d'aspiration de gaz (22),
que l'obturateur (33) a un prolongement (34) s'étendant dans le récipient (14) et
le transpondeur RFID (28) a un prolongement (35) s'étendant également dans le récipient (14) à travers une ouverture de passage du prolongement (34) de l'obturateur (33).

2. Couvercle selon la revendication 1 associé à un récipient (14), en particulier à un récipient réutilisable, pouvant être fermé hermétiquement au moyen du couvercle (10).

3. Couvercle selon la revendication 2, **caractérisé en ce qu'**il est associé ou peut être associé à un récipient (14) en acier inoxydable, en matière plastique, en matériau émaillé ou en matériau multicouche métallique, en particulier un récipient GN.

4. Couvercle selon une des revendications précédentes associé en plus à un appareil de cuisson (40) télécommandé ou réglé à distance au moyen d'un transpondeur RFID (28).
